# EUROPEAN PATENT SPECIFICATION

(11) **EP 1 504 973 B1**
(45) Date of publication and mention of the grant of the patent: **19.07.2006**
(21) Application number: 04018734.6
(22) Date of filing: 06.08.2004
(51) Int. Cl.: B60S 1/52, B05B 1/08

(54) **Vehicular washer nozzle and vehicular washer device having diffusion regulating structure**
Düse für Fahrzeugwaschanlage und Fahrzeugwaschvorrichtung mit einer diffusionskontrollierten Struktur
Gicleur de lave-glace pour véhicule et dispositif lave-glace pour véhicule ayant une structure régulant la diffusion

(30) Priority: 08.08.2003 JP 2003289758
(43) Date of publication of application: 09.02.2005
(73) Proprietor: ASMO CO., LTD., Kosai-city, Shizuoka-pref. 431-0493 (JP)
(72) Inventor: Fukushima, Tsuneo c/oAsmo Co., Ltd., Kosai-city Shizuoka-pref., 431-0493 (JP); Kawaguchi, Tomohide c/oAsmo Co., Ltd., Kosai-city Shizuoka-pref., 431-0493 (JP)
(74) Representative: Kuhnen & Wacker

(56) References cited:
- DE-A1- 10 020 044
- JP-A- 59 034 965
- US-A- 4 721 251

## Description

The present invention relates to a vehicular washer nozzle that jets cleansing liquid to wash a windshield of a vehicle, and a vehicular washer device that is provided with a washer nozzle to wash a windshield of a vehicle.

A washer device according to JP-A-10-236283 is constructed such that pressure-fed cleansing liquid is jetted toward a windshield. The washer nozzle is fixed to project above an engine hood of a vehicle, so that an outward appearance is degraded in terms of vehicular design. In addition, a vehicle body gets dirt when the cleansing liquid remaining in a hose drips from the washer nozzle.

In order to remedy a disadvantage of the washer device (washer nozzle) shown in JP-A-10-236283, another structure is proposed in JP-A-2000-344062, in which a washer nozzle is provided on an underside of a rear portion of an engine hood of a vehicle,

However, in the washer device (washer nozzle) shown in JP-A-2000-344062, wiper arms are arranged lengthwise along a widthwise direction of the vehicle, when a wiper device is stopped (in a stopped position) and a rear end edge of the engine hood comes out. Accordingly, when cleansing liquid is jetted toward a windshield from the washer nozzle, the jetted cleansing liquid may interfere with the wiper arms and the rear end edge of the engine hood, and scattered wastefully.

In particular, when a diffusion jet nozzle is adopted in order to supply cleansing liquid to a wide range of a windshield, the jetted cleansing liquid may be scattered. JP59034965 discloses a washer nozzle and device according to the preambles of claims 1 and 8. Here, the diffusion jet nozzle makes use of a fluid element (nozzle tip) to feed back a part of diffusive flow to cause self-oscillation of the same as a control flow, whereby a flow is jetted from the washer nozzle as diffusive flow spreading in a widthwise direction of the vehicle. That is, diffusive flow jetted from such a diffusion jet nozzle is not concentrated like jet flow, but water droplets of a small particle size are spread and jetted in the widthwise direction of the vehicle. The diffusive flow is also spread in a heightwise direction of the vehicle. Accordingly, it is difficult to sprinkle the diffusion jet flow on a desired sprinkle point from a narrow gap between the wiper arms and the rear end edge of the engine hood without interference.

In view of the foregoing problems, it is an object of the present invention to provide a vehicular washer nozzle (vehicular washer devices) capable of sprinkling a diffused jet flow over a wide range in a widthwise direction of the vehicle and furthermore sprinkling the diffused jet flow on a target sprinkle point from a narrow gap between wiper arms and a rear end edge of an engine hood without interference.

According to the present invention, a vehicular washer device has a washer nozzle arranged on a back surface side of a rear end edge of an engine hood of a vehicle to jet pressure-fed cleansing liquid toward a windshield. The vehicular washer nozzle includes a nozzle body, a nozzle tip, a diffusion restriction portion, and a mount opening. The nozzle body is fixed to the vehicle, and formed with a feed passage through which the pressure-fed cleansing liquid is guided and fed. The nozzle tip is integrally assembled fluid-tightly to a receiving portion formed in the nozzle body. The nozzle tip defines an oscillation chamber and a diffusive jet port. The oscillation chamber communicates to the feed passage to cause self-oscillation of the cleansing liquid fed from the feed passage. The diffusive jet port communicates to the oscillation chamber to jet the cleansing liquid as a diffusive flow diffused in a widthwise direction of the vehicle. The diffusion restriction portion is provided on the nozzle body to outwardly open along a direction, in which a diffusive flow is jetted from the diffusive jet port. The diffusion restriction portion restricts and regulates the diffusive flow jetted from the diffusive jet port in a vertical direction of the vehicle, when the nozzle tip is assembled to the receiving portion of the nozzle body. The mount opening communicates to the receiving portion of the nozzle body and opens in a different direction than one direction, in which the diffusion restriction portion opens. The nozzle tip is assembled to the receiving portion through the mount opening.

The above and other objects, features and advantages of the present invention will become more apparent from the following detailed description made with reference to the accompanying drawings. In the drawings:
Fig. 1 is a partially cross sectional side view showing an entire structure of a washer nozzle and a washer device according to a first embodiment of the present invention;
Fig. 2 is a partially cross sectional side view showing the structure of the washer nozzle according to the first embodiment;
Fig. 3 is a perspective view showing the structure of a nozzle tip of the washer nozzle according to the first embodiment;
Fig. 4 is a rear view showing the structure of the nozzle tip of the washer nozzle according to the first embodiment;
Fig. 5 is a perspective view showing wiper arms of a wiper device according to an embodiment of the present invention;
Fig. 6 is a cross sectional side view showing another example of a nozzle body of the washer nozzle according to the first embodiment;
Fig. 7 is a partially cross sectional side view showing the structure of a washer nozzle according to a second embodiment of the present invention;
Fig. 8 is a partially cross sectional side view showing the structure of a washer nozzle according to a third embodiment of the present invention;
Fig. 9 is a perspective view showing a structure of the washer nozzle according to the third embodiment;
Fig. 10 is a partially cross sectional side view showing a structure of a washer nozzle according to a fourth embodiment of the present invention; and
Fig. 11 is a partially cross sectional side view showing a structure of a washer nozzle according to a fifth embodiment of the present invention.

### (First Embodiment)

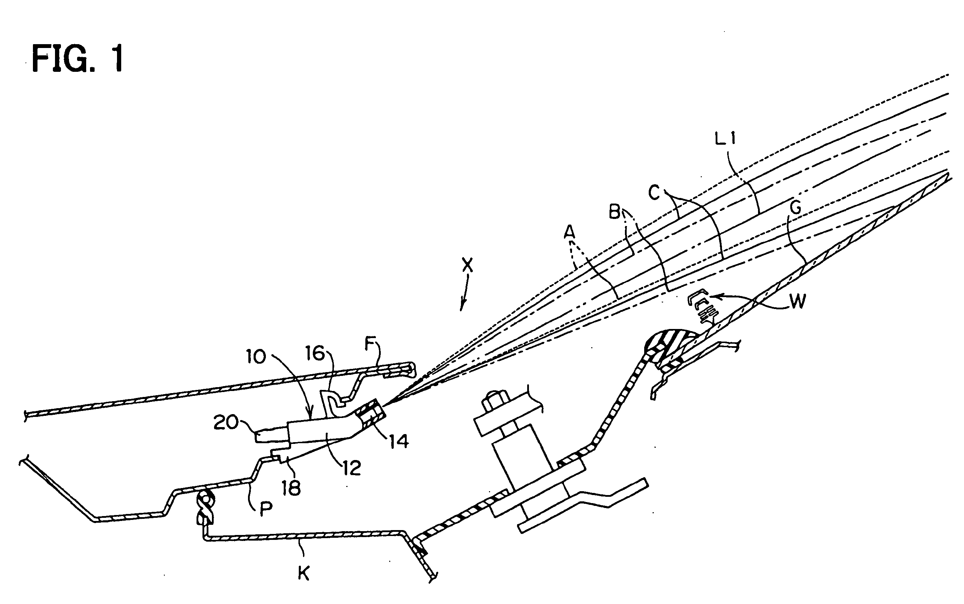

As shown in Fig. 1, a washer device X includes a washer nozzle 10 that has a nozzle body 12 and a nozzle tip 14. The nozzle body 12 is made of a resinous material, and formed on the upper surface side thereof with an elastic latch piece 16 and on the lower surface side thereof with a latch pawl 18. The elastic latch piece 16 and the latch pawl 18 are fitted into a back-side panel P on a rear end edge of an engine hood F of a vehicle to fix and arrange the nozzle body 12. A cylindrical-shaped hose connection 20 is formed at a rear end of the nozzle body 12 to be connected with a hose 22 that is connected to cleansing liquid containing tank (not shown).

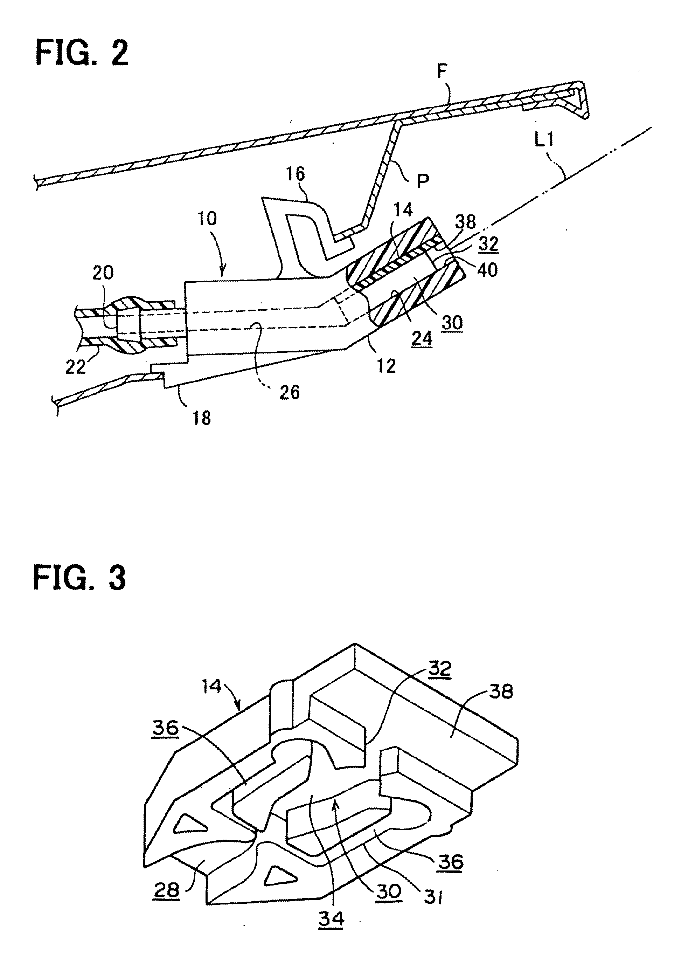

As shown in Fig. 2, the nozzle body 12 is formed with a tip receiving portion 24 that is opened to a front surface side (a side of a windshield G in Figs. 1 and 2) of the nozzle body 12. A feed passage 26 is formed contiguous to the tip receiving portion 24 of the nozzle body 12. One end of the feed passage 26 extends to the hose connection 20.

The nozzle tip 14 formed by resin molding is integrally and fluid-tightly fitted into the tip receiving portion 24 of the nozzle body 12. As shown in detail in Fig. 3, the nozzle tip 14 is formed to be substantially box-shaped, and inserted into the tip receiving portion 24 of the nozzle body 12 from a front opened side thereof to be assembled thereto. The nozzle tip 14 is formed with a flow passage 28 (forming a part of the feed passage 26) that is communicated to the feed passage 26 in a state of being fitted into the tip receiving portion 24 of the nozzle body 12. Further, an oscillation chamber 30 and a diffusive jet port 32 are formed on the lower side (lower side in Figs. 1 to 3) of the nozzle tip 14.

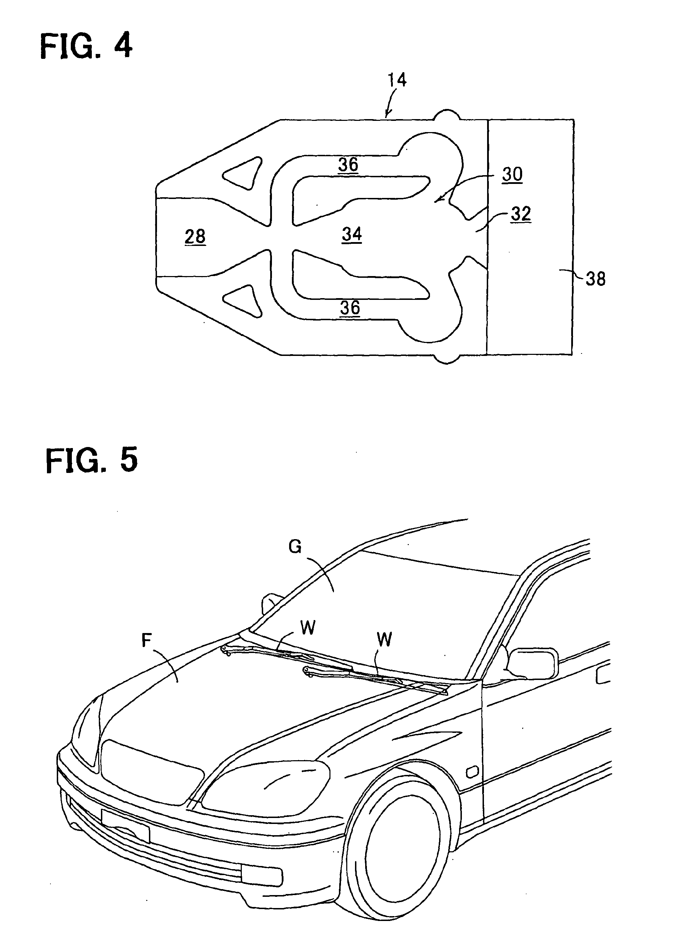

As shown in detail in Fig. 4, the oscillation chamber 30 is formed with a main flow passage 34, which is contiguous to the flow passage 28 and communicated to the diffusive jet port 32, and a pair of feedback flow passages 36 that substantially horizontally branch left and right from the main flow passage 34. Cleansing liquid is supplied to the oscillation chamber 30 from the flow passage 28. The feedback flow passages 36 are formed such that a part of the cleansing liquid fed from the flow passage 28 is divided and guided at this time to be returned to the main flow passage 34. Thereby, the cleansing liquid guided to the feedback flow passages 36 makes a "control flow" to cause self-oscillation of the cleansing liquid flowing in the main flow passage 34. The cleansing liquid causing the self-oscillation is jetted as a sector-shaped diffusive flow from the diffusive jet port 32. Accordingly, the cleansing liquid can be jetted over a comparatively wide range in a widthwise direction of the vehicle to increase an area being cleansed.

The nozzle tip 14 is formed with an upper correction plate portion 38 that serves as a diffusion restriction portion. The upper correction plate portion 38 is integrally formed to extend from immediately above the diffusive jet port 32, i.e., a bottom wall portion opposed to an opening surface 31 of the oscillation chamber 30. The upper correction plate portion 38 is provided along a jet direction of diffusive flow jetted from the diffusive jet port 32. Thereby, when the nozzle tip 14 is assembled to the tip receiving portion 24 of the nozzle body 12, the upper correction plate portion 38 is opposed immediately backwardly of the diffusive jet port 32 to an opening lower wall surface 40 (Fig. 2) in a front opened portion of the tip receiving portion 24 of the nozzle body 12. The flat-shaped upper correction plate portion 38 and the opening lower wall surface 40, which extend continuously over the nozzle tip 14 in its widthwise direction, form the diffusion restriction portion.

That is, when the nozzle tip 14 is assembled to the tip receiving portion 24 of the nozzle body 12, the diffusion restriction portion formed by the upper correction plate portion 38 and the opening lower wall surface 40 is opened outside along a target jet direction L1 of the diffusive flow jetted from the diffusive jet port 32. The upper correction plate portion 38 restricts and regulates an upward diffusion of diffusive flow jetted from the diffusive jet port 32, and the opening lower wall surface 40 restricts and regulates a downward diffusion of diffusive flow jetted from the diffusive jet port 32. That is, the upper correction plate portion 38 of the nozzle tip 14 and the opening lower wall surface 40 of the tip receiving portion 24 of the nozzle body 12 cooperate together to restrict and regulate diffusion of diffusive flow jetted from the diffusive jet port 32, in the vertical direction of the vehicle. The vertical direction of the vehicle is perpendicular to a direction of diffusion.

Besides, in this case, the target jet direction L1 of the diffusive flow, which is regulated by the upper correction plate portion 38 and the opening lower wall surface 40, becomes coincident (coaxial) with a direction, in which the nozzle tip 14 is inserted into and assembled to the tip receiving portion 24 of the nozzle body 12. That is, the target jet direction L1 of the diffusive flow becomes parallel to the bottom wall surface of the oscillation chamber 30.

As described above, with the washer nozzle 10, the diffusive jet port 32 is a "fluidics type nozzle". Cleansing liquid is jetted as diffusive flow from the diffusive jet port 32, and the diffusion restriction portion formed by the upper correction plate portion 38 and the opening lower wall surface 40 restricts and regulates a vertical diffusion of the diffusive flow to enable diffusively jetting the diffusive flow.

Next, an operation of the first embodiment will be described.

In the washer device X, to which the washer nozzle 10 constructed in the manner described above is applied, the washer nozzle 10 is arranged on a back surface side of a rear end edge of the engine hood F of a vehicle.

Cleansing liquid pressure-fed from the tank passes through the hose connection 20 and the feed passage 26 of the nozzle body 12, and flows into the oscillation chamber 30 of the nozzle tip 14 after passing through the flow passage 28. At this time, a part of the cleansing liquid fed from the flow passage 28 is divided by the feedback flow passages 36 to be returned to the main flow passage 34. Thereby, the cleansing liquid guided to the feedback flow passages 36 makes a control flow to cause self-oscillation of the cleansing liquid flowing in the main flow passage 34. The cleansing liquid occurring self-oscillation becomes water droplets of a small particle size to be jetted as a sector-shaped diffusive flow in the widthwise direction of the vehicle from the diffusive jet port 32.

Here, with the washer nozzle 10, when the nozzle tip 14 is assembled to the tip receiving portion 24 of the nozzle body 12, the diffusion restriction portion is opened outside along the jet direction of diffusive flow jetted from the diffusive jet port 32. The diffusive flow jetted from the diffusive jet port 32 is restricted in diffusion in the vertical direction of the vehicle by the upper correction plate portion 38 and the opening lower wall surface 40 to be regulated. The vertical direction of the vehicle is the direction perpendicular to the direction of diffusion of the cleansing liquid. Here, the diffusion restriction portion is constructed with the upper correction plate portion 38 of the nozzle tip 14 and the opening lower wall surface 40 of the tip receiving portion 24 of the nozzle body 12.

Accordingly, even when the washer nozzle 10 is arranged on the back surface side of the rear end edge of the engine hood F of a vehicle, and wiper arms W in its stopped position are arranged lengthwise along the widthwise direction of the vehicle as shown in Fig. 5, the diffusive flow jetted from the diffusive jet port 32 can be sprinkled over a wide range in the widthwise direction of the vehicle. Besides, the diffusive flow can be sprinkled on a target sprinkle point of the windshield G from a narrow gap between the wiper arms W and the rear end edge of the engine hood F as shown by broken lines A, alternate long and short dash lines B, and solid lines C in Fig. 1 without interference.

As shown in Fig. 1, a jet range indicated by the broken lines A defines an upper limit range. A jet range indicated by the alternate long and short dash lines B defines a lower limit range. A jet range indicated by the solid lines C defines a target jet range, and the straight line L1 indicates a target jet direction, in which sprinkling in the target jet range is performed.

Also, since the washer nozzle 10 is arranged on the back surface side of the rear end edge of the engine hood F of a vehicle, surfaces of a vehicle body do not get dirt even when cleansing liquid remaining in the hose 22 drips, for example. Here, the hose 22 supplies cleansing liquid. Besides, a vehicle is improved in design quality.

Further, with the washer nozzle 10, the oscillation chamber 30 having a complex shape relative to the diffusive jet port 32 is formed to be opened to an underside of the nozzle tip 14. Besides, the upper correction plate portion 38 constructing the diffusion restriction portion is integrally formed to extend from the bottom wall portion of the nozzle tip 14 opposed to the opening surface 31 of the oscillation chamber 30. Therefore, the upper correction plate portion 38 may be in a simple shape, in which the bottom wall portion of the nozzle tip 14 is extended in a manner like a pent roof. Accordingly, when the nozzle tip 14 is molded from a resinous material, a molding die can be in a simple shape.

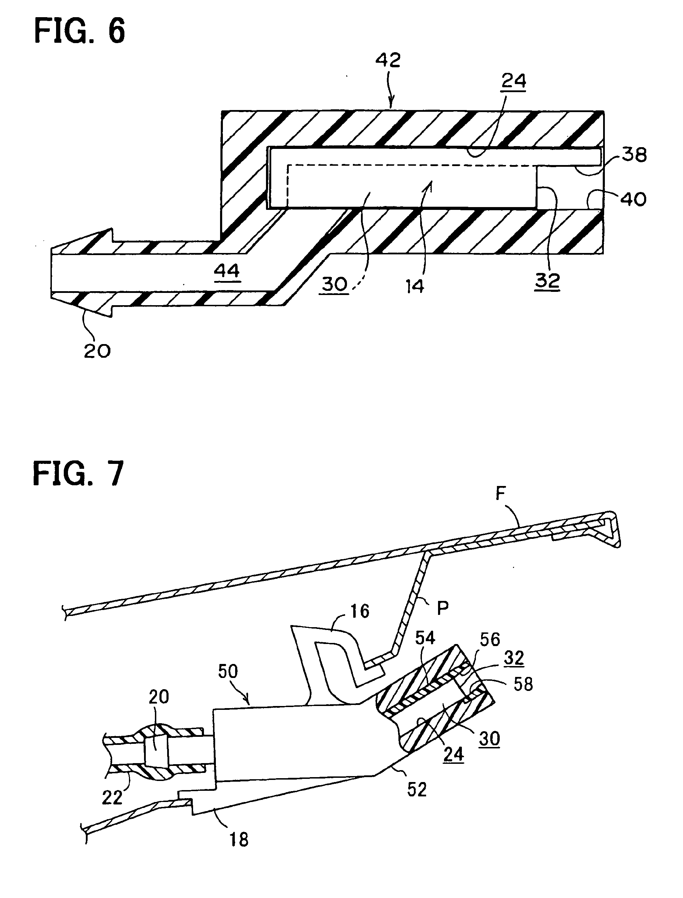

The feed passage 26 of the nozzle body 12 is formed to be communicated linearly to the flow passage 28 of the nozzle tip 14, in this embodiment. However, a feed passage 44 may be communicated to an underside of the oscillation chamber 30 of the nozzle tip 14 in a washer nozzle 42 shown in Fig. 6.

### (Second Embodiment)

As shown in Fig. 7, a washer nozzle 50 has a nozzle body 52 and a nozzle tip 54. The nozzle body 52 has the substantially same structure as that of the nozzle body 12 of the washer nozzle 10 described in the first embodiment, and accommodates a nozzle tip 54 in a tip receiving portion 24 thereof.

On the contrary, similarly to the nozzle tip 14 of the washer nozzle 10 described in the first embodiment, the nozzle tip 54 is formed with an oscillation chamber 30 and a diffusive jet port 32 on the underside (lower side in Fig. 7) thereof.

Further, the nozzle tip 54 is formed with an upper correction plate portion 56 and a lower correction plate portion 58, which form a diffusion restriction portion. Similarly to the upper correction plate portion 38 of the washer nozzle 10 described in the first embodiment, the upper correction plate portion 56 forming the diffusion restriction portion is integrally formed to extend from immediately above a diffusive jet port 32. That is, the upper correction plate portion 56 is integrally formed to extend from a bottom wall portion opposed to an opening surface 31 of the oscillation chamber 30, and provided along a jet direction of diffusive flow jetted from the diffusive jet port 32. On the contrary, the lower correction plate portion 58 forming the diffusion restriction portion is integrally formed to extend from immediately below the diffusive jet port 32. That is, the lower correction plate portion 58 is integrally formed to extend from a wall portion on a side of the opening surface 31 of the oscillation chamber 30, and provided along the jet direction of diffusive flow jetted from the diffusive jet port 32. Thereby, the upper correction plate portion 56 and the lower correction plate portion 58 face each other in a parallel state immediately backwardly of the diffusive jet port 32. The upper correction plate portion 56 and the lower correction plate portion 58 form the diffusion restriction portion.

That is, the diffusion restriction portion formed with the upper correction plate portion 56 and the lower correction plate portion 58 is provided to be opened outside along the jet direction of diffusive flow jetted from the diffusive jet port 32. The upper correction plate portion 56 restricts and regulates an upward diffusion of diffusive flow jetted from the diffusive jet port 32, and the lower correction plate portion 58 restricts and regulates an downward diffusion of diffusive flow jetted from the diffusive jet port 32. That is, the upper correction plate portion 56 and the lower correction plate portion 58 of the nozzle tip 54 cooperate together to restrict and regulate diffusion, in the vertical direction of the vehicle, of diffusive flow jetted from the diffusive jet port 32.

Besides, in this case, the upper correction plate portion 56 and the lower correction plate portion 58 are inclined upward at a predetermined angle relative to a direction, in which the nozzle tip 54 is inserted into and assembled to the tip receiving portion 24 of the nozzle body 12. That is, an axis of a regulated diffusive flow in its jet direction is directed upward at a predetermined angle relative to the bottom wall surface of the oscillation chamber 30. Therefore, target jet can be set in the vertical direction of the vehicle, which is different from the direction, in which the nozzle tip 54 is inserted into and assembled to the tip receiving portion 24 of the nozzle body 12.

As described above, with the washer nozzle 50, the diffusive jet port 32 has a structure of a "fluidics type nozzle". Thus, cleansing liquid is jetted as diffusive flow from the diffusive jet port 32. Besides, the diffusion restriction portion formed by the upper correction plate portion 56 and the lower correction plate portion 58 of the nozzle tip 54 restricts and regulates diffusion of the diffusive flow in the vertical direction of the vehicle to enable diffusively jetting the diffusive flow.

Next, an operation of the second embodiment will be described.

With the washer nozzle 50, the diffusion restriction portion is formed by the upper correction plate portion 56 and the lower correction plate portion 58, which are formed to extend integrally from the nozzle tip 54. Accordingly, the diffusion restriction portion can be formed by only the nozzle tip 54 without depending on the nozzle body 52. Therefore, the nozzle body 52 can be commonly used for different nozzle tips 54. Besides, an action of regulation, in which diffusion of diffusive flow in the vertical direction of the vehicle is restricted by the upper correction plate portion 56 and the lower correction plate portion 58. Furthermore, a jet angle (direction) can be set with high accuracy without being affected by the assembling accuracy of the nozzle tip 54. Here, the vertical direction of the vehicle is perpendicular to the direction of diffusion.

Further, with the washer nozzle 50, the upper correction plate portion 56 and the lower correction plate portion 58 are provided to be inclined upward at a predetermined angle and an axis of a regulated diffusive flow in its jet direction is directed upward at a predetermined angle. Therefore, setting of a jet angle can be easily modified every vehicle or every type of vehicle by making a shape of the oscillation chamber 30 common for different nozzle tips 54, that is, by setting only the upper correction plate portion 56 and the lower correction plate portion 58 in a different manner. Here, the oscillation chamber 30 is a fundamental constituent portion (important constituent portion) of the nozzle tip 54.

In addition, in this embodiment, the upper correction plate portion 56 and the lower correction plate portion 58 face each other in a parallel state immediately backwardly of the diffusive jet port 32. However, the upper correction plate portion 56 and the lower correction plate portion 58 may be shaped vertically small, so that a passage is gradually made convergent in height toward a tip end side (side of the outside opening) from the diffusive jet port 32.

In this case, a vertical extent of a jetted diffusive flow can be further corrected, and jet pressure of diffusive flow jetted from the diffusive jet port 32 can be suitably raised, so that jet can be efficiently achieved.

### (Third Embodiment)

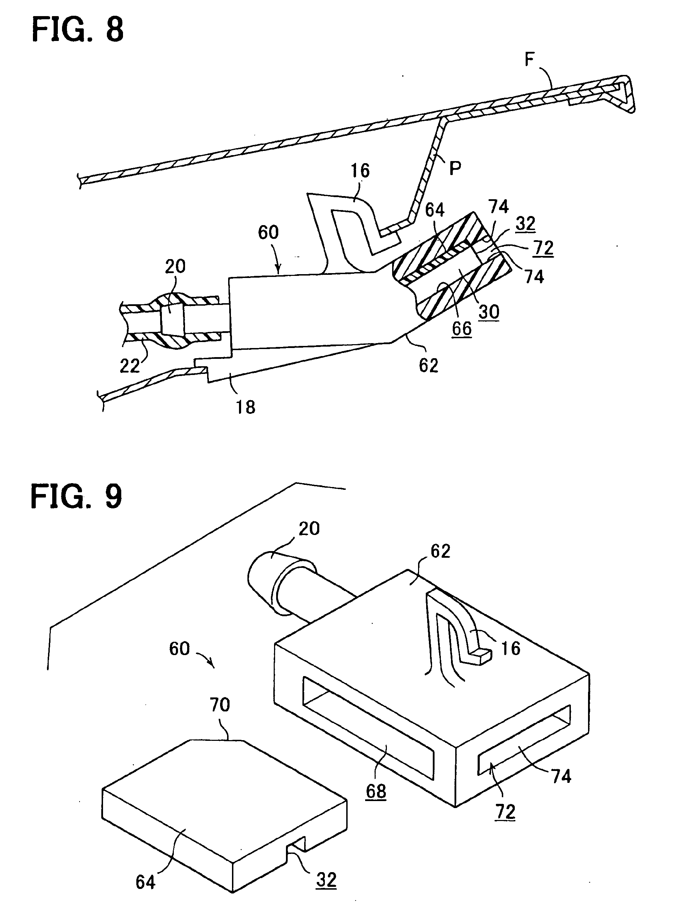

As shown in Figs. 8 and 9, a washer nozzle 60 has a nozzle body 62 and a nozzle tip 64. The nozzle body 62 has a fundamentally the same structure as that of the nozzle body 12 of the washer nozzle 10 described in the first embodiment, and accommodates a nozzle tip 64 in a tip receiving portion 66.

The tip receiving portion 66 of the nozzle body 62 is opened to a right side (front side of the plane of Fig. 8) of the nozzle body 62, and the opening forms a mount opening 68, through which the nozzle tip 64 is assembled to the tip receiving portion 66 of the nozzle body 62.

On the other hand, the nozzle tip 64 has fundamentally the same structure as that of the nozzle tip 14 of the washer nozzle 10 according to the first embodiment, and the nozzle tip 64 is formed with an oscillation chamber 30 and a diffusive jet port 32. The nozzle tip 64 (Fig. 9) is provided in a corner on a rear end side thereof with a chamfer 70. When the nozzle tip 64 is assembled to the tip receiving portion 66 of the nozzle body 62 from the mount opening 68 of the nozzle body 62, the chamfer 70 serves as a confirmation portion of orientation of the nozzle tip 64 and can prevent the nozzle tip 64 from wrong assembling.

Also, a passage 72 is formed in a front part (right side in Fig. 8) of the nozzle body 62. The passage 72 is formed to be opened outside along a direction, in which diffusive flow from the diffusive jet port 32 is jetted, when the nozzle tip 64 is assembled to the tip receiving portion 66 of the nozzle body 62. Besides, upper and lower opening wall surface portions 74 of the passage 72 form a diffusion restriction portion. That is, when the nozzle tip 64 is assembled to the tip receiving portion 66 of the nozzle body 62, the pair of upper and lower opening wall surface portions 74, which form the diffusion restriction portion, extend contiguous to upper and lower end edges of the diffusive jet port 32, and face each other in a parallel state. The pair of upper and lower opening wall surface portions 74 extend along a direction, in which diffusive flow from the diffusive jet port 32 is jetted, to restrict and regulate diffusion of diffusive flow jetted from the diffusive jet port 32 in the vertical direction of the vehicle.

Besides, in this case, an axis of diffusive flow regulated by the pair of upper and lower opening wall surface portions 74 in its jet direction is made coincident (coaxial) with the bottom wall surface of the oscillation chamber 30 of the nozzle tip 64, when the nozzle tip 64 is assembled to the tip receiving portion 66 of the nozzle body 62.

Next, an operation of the third embodiment will be described.

With the washer nozzle 60 (washer device, to which the washer nozzle 60 is applied) constructed in the above manner, the washer nozzle 60 is arranged on a back surface side of a rear end edge of an engine hood F of a vehicle.

Cleansing liquid is pressure-fed from the tank into the oscillation chamber 30 of the nozzle tip 64 through a hose connection 20 of the nozzle body 62. At this time, a part of the cleansing liquid fed from a flow passage 28 is divided and guided by feedback flow passages 36 to be returned to a main flow passage 34. Thereby, the cleansing liquid guided to the feedback flow passages 36 makes a control flow to cause self-oscillation of the cleansing liquid flowing in the main flow passage 34. The cleansing liquid causing self-oscillation is made water droplets of a small particle size to be jetted as a sector-shaped diffusive flow in the widthwise direction of the vehicle from the diffusive jet port 32.

Here, with the washer nozzle 60, the pair of upper and lower opening wall surface portions 74 of the passage 72 are provided to extend contiguous to upper and lower end edges of the diffusive jet port 32 respectively, when the nozzle tip 64 is assembled to the tip receiving portion 66 of the nozzle body 62. That is, the pair of upper and lower opening wall surface portions 74 are provided to extend along a direction, in which diffusive flow is jetted from the diffusive jet port 32, and face each other parallelly. The diffusive flow jetted from the diffusive jet port 32 is restricted in diffusion in the vertical direction of the vehicle by the pair of upper and lower opening wall surface portions 74 to be regulated.

Accordingly, even when the washer nozzle 60 is arranged on the back surface side of the rear end edge of the engine hood F of a vehicle, and wiper arms W are arranged lengthwise along the widthwise direction of the vehicle as shown in Fig. 5 when being in a stopped position, diffusive flow jetted from the diffusive jet port 32 can be sprinkled over a wide range in the widthwise direction of the vehicle. Besides, the diffusive flow can be sprinkled on a target sprinkle point from a narrow gap between the wiper arms W and the rear end edge of the engine hood F without interference.

Further, with the washer nozzle 60, the diffusion restriction portion is formed by the pair of upper and lower opening wall surface portions 74 of the passage 72 formed in the nozzle body 62, so that the diffusion restriction portion can be formed by only the nozzle body 62 without depending on the nozzle tip 64. Therefore, that restriction (regulation) on diffusion of diffusive flow in the vertical direction, which is imposed by the pair of upper and lower opening wall surface portions 74, and a jet angle (direction) can be set with high accuracy without being affected by the assembling accuracy of the nozzle tip 64.

Besides, in this case, the nozzle body 62 is provided with the mount opening 68 that is opened in a different direction than one direction, in which the pair of upper and lower opening wall surface portions 74 (the passage 72) as the diffusion restriction portion are opened. The nozzle tip 64 is assembled to the tip receiving portion 66 of the nozzle body 62 from the mount opening 68. That is, the nozzle tip 64 is assembled to the nozzle body 62 from the mount opening 68 opened in a different direction than one direction, in which the opening wall surface portions 74 (the passage 72) are opened. Therefore, the nozzle tip 64 can be assembled to the tip receiving portion 66 of the nozzle body 62 without being affected by a shape of the pair of upper and lower opening wall surface portions 74 as the diffusion restriction portion. Thus, even when an angle, in which diffusion of diffusive flow in the vertical direction of the vehicle is restricted by the pair of upper and lower opening wall surface portions 74, and a jet angle (direction) are set differently, the nozzle tip 64 can be used in common, and such difference can be accommodated on a side of the nozzle body 62.

Also, since the washer nozzle 60 is arranged on the back surface side of the rear end edge of the engine hood F of a vehicle, surfaces of a vehicle body do not get dirt even when the cleansing liquid remaining in the hose 22 drips, for example. Besides, a vehicle is improved in design quality.

### (Fourth Embodiment)

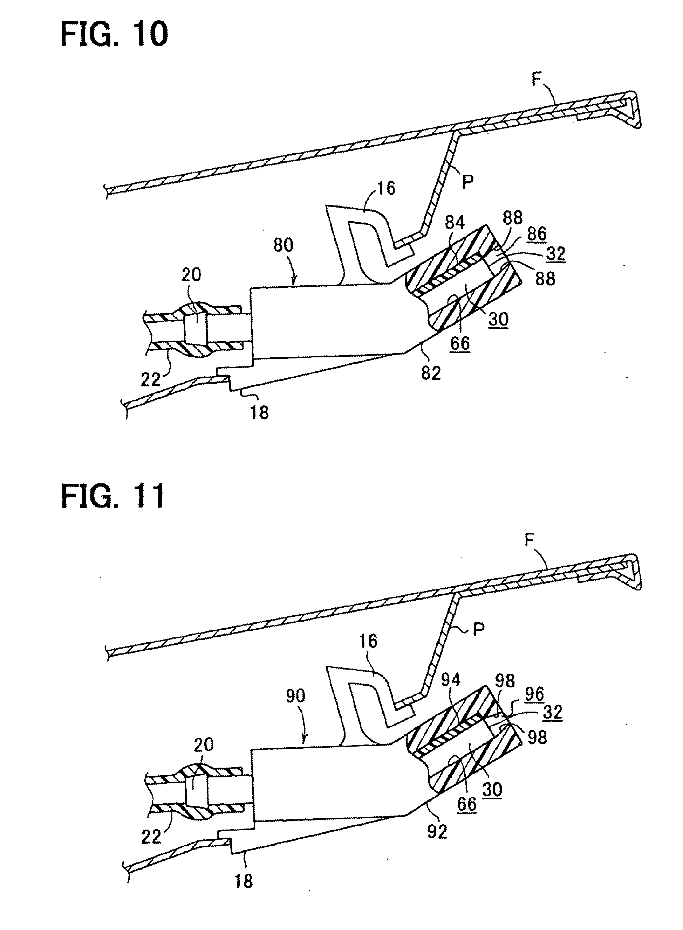

As shown in Fig. 10, a washer nozzle 80 has a nozzle body 82 and a nozzle tip 84. The nozzle body 82 has a substantially the same structure as that of the nozzle body 62 of the washer nozzle 60 described in the third embodiment, and accommodates a nozzle tip 84 in a tip receiving portion 66. The nozzle tip 84 has a substantially the same structure as that of the nozzle tip 64 of the washer nozzle 60 described in the third embodiment.

Further, a passage 86 is formed in a front part (right side in Fig. 10) of the nozzle body 82. The passage 86 is opened outside along a direction, in which diffusive flow from the diffusive jet port 32 is jetted, when the nozzle tip 84 is assembled to the tip receiving portion 66 of the nozzle body 62. Upper and lower opening wall surface portions 88 of the passage 86 form a diffusion restriction portion. That is, when the nozzle tip 84 is assembled to the tip receiving portion 66 of the nozzle body 62, the pair of upper and lower opening wall surface portions 88 that form the diffusion restriction portion extend contiguous to upper and lower end edges of the diffusive jet port 32. That is, the pair of upper and lower opening wall surface portions 88 extend along a direction, in which diffusive flow is jetted from the diffusive jet port 32, and face each other in a parallel state. Besides, the pair of upper and lower opening wall surface portions 88 restrict and regulate diffusion of diffusive flow jetted from the diffusive jet port 32 in the vertical direction of the vehicle.

Besides, in this case, the upper and lower opening wall surface portions 88 are inclined upward at a predetermined angle relative to a bottom wall surface of an oscillation chamber 30 of the nozzle tip 84 assembled to the tip receiving portion 66 of the nozzle body 62. That is, an axis of a regulated diffusive flow in its jet direction is directed upward at a predetermined angle.

Next, an operation of the fourth embodiment will be described.

With the washer nozzle 80, the diffusion restriction portion is formed by the pair of upper and lower opening wall surface portions 88 of the passage 86 formed in the nozzle body 82, so that the diffusion restriction portion can be formed by only the nozzle body 82 without depending on the nozzle tip 84. Therefore, that restriction (regulation) on diffusion of diffusive flow in the vertical direction of the vehicle, which is imposed by the pair of upper and lower opening wall surface portions 88, and a jet angle (direction) can be set with high accuracy without being affected by the assembling accuracy of the nozzle tip 84.

Further, with the washer nozzle 80, the pair of upper and lower opening wall surface portions 88 are provided to be inclined upward at a predetermined angle, and an axis of a regulated diffusive flow in its jet direction is directed upward at a predetermined angle. Therefore, setting of a jet angle can be easily modified every vehicle or every type of vehicle by making a shape of the oscillation chamber 30 common for different nozzle tips 84, that is, by setting only the pair of upper and lower opening wall surface portions 88 of the nozzle body 82 in a different manner. Here, the oscillation chamber 30 is a fundamental constituent portion (important constituent portion) of the nozzle tip 84.

### (Fifth Embodiment)

As shown in Fig. 11, a washer nozzle 90 has a nozzle body 92 and a nozzle tip 94. The nozzle body 92 has substantially the same structure as that of the nozzle body 62 of the washer nozzle 60 described in the third embodiment, and accommodates a nozzle tip 94 in a tip receiving portion 66. The nozzle tip 94 has substantially the same structure as that of the nozzle tip 64 of the washer nozzle 60 described in the third embodiment.

Further, a passage 96 is formed in a front part (right side in Fig. 11) of the nozzle body 92. The passage 96 is opened outside along a direction, in which diffusive flow is jetted from the diffusive jet port 32, when the nozzle tip 94 is assembled to the tip receiving portion 66 of the nozzle body 62. Upper and lower opening wall surface portions 98 of the passage 96 form a diffusion restriction portion. That is, when the nozzle tip 94 is assembled to the tip receiving portion 66 of the nozzle body 62, the pair of upper and lower opening wall surface portions 98 that form the diffusion restriction portion extend contiguous to upper and lower end edges of the diffusive jet port 32. Namely, the pair of upper and lower opening wall surface portions 98 extend along a direction, in which diffusive flow from the diffusive jet port 32 is jetted, and face each other. Besides, the pair of upper and lower opening wall surface portions 98 restrict and regulate diffusion of diffusive flow jetted from the diffusive jet port 32 in the vertical direction of the vehicle.

Besides, in this case, the upper and lower opening wall surface portions 98 are shaped vertically small. Therefore, the passage 96 is gradually made convergent, i.e., narrow in height toward a tip end side (side of the outside opening) from the diffusive jet port 32 of the nozzle tip 94 assembled to the tip receiving portion 66 of the nozzle body 62.

Next, an operation of the fifth embodiment will be described.

With the washer nozzle 90, the diffusion restriction portion is formed by the pair of upper and lower opening wall surface portions 98 of the passage 96 formed in the nozzle body 92, so that the diffusion restriction portion can be formed by only the nozzle body 92 without depending on the nozzle tip 94. Therefore, that restriction (regulation) on diffusion of diffusive flow in the vertical direction of the vehicle, which is imposed by the pair of upper and lower opening wall surface portions 98, and a jet angle (direction) can be set with high accuracy without being affected by the assembling accuracy of the nozzle tip 94.

Further, with the washer nozzle 90, the pair of upper and lower opening wall surface portions 98 are shaped vertically small. Therefore, the passage 96 is gradually made convergent, i.e., narrow in height (spacing between the pair of upper and lower opening wall surface portions 98) toward a tip end side (side of the outside opening), so that a vertical extent of a jetted diffusive flow can be further corrected. Thus, jet pressure of diffusive flow jetted from the diffusive jet port 32 can be suitably raised, so that jet can be efficiently formed.

The respective embodiments are described with respect to a structure, in which the washer nozzle 10, 50, 60, 80, 90, or the like is mounted to the back-side panel P on the rear end edge of the engine hood F of a vehicle. However, the washer nozzle may be mounted to a cowl panel (including a cowl top panel) K as long as the panel is disposed on a back surface side of the rear end edge of the engine hood F.

## Claims

1. A vehicular washer nozzle arranged on a back surface side of a rear end edge of an engine hood (F) of a vehicle to jet pressure-fed cleansing liquid toward a windshield, the vehicular washer nozzle comprising:
a nozzle body (12, 52, 62, 82, 92) that is fixed to the vehicle and formed with a feed passage (26, 44) through which the pressure-fed cleansing liquid is guided and fed; **characterized in that** the washer nozzle further comprises :
a nozzle tip (14, 54, 64, 84, 94) that is integrally assembled fluid-tightly to a receiving portion (24, 66) formed in the nozzle body (12, 52, 62, 82, 92), such that the nozzle tip (14, 54, 64, 84, 94) defines:
an oscillation chamber (30) that communicates to the feed passage (26, 44) to cause self-oscillation of the cleansing liquid fed from the feed passage (26, 44); and
a diffusive jet port (32) that communicates to the oscillation chamber (30) to jet the cleansing liquid as a diffusive flow diffused in a widthwise direction of the vehicle; and
a diffusion restriction portion (38, 40, 56, 58, 74, 88, 98) that extends from the diffusive jet port (32) along a direction in which a diffusive flow is jetted so that the diffusion restriction portion (38, 40, 56, 58, 74, 88, 98) restricts and regulates the diffusive flow jetted from the diffusive jet port (32) in a vertical direction of the vehicle.

2. The vehicular washer nozzle according to claim 1, **characterized in that**
the oscillation chamber (30) opens to one of upper and lower surfaces of the nozzle tip (14), and
the diffusion restriction portion (38, 40) is defined by both an upper correction plate portion (38), which integrally extends from a bottom wall portion of the nozzle tip (14) opposed to an opening surface of the oscillation chamber (30), and an opening lower wall surface (40) of the nozzle body (12) on a side of the opening surface of the oscillation chamber (30).

3. The vehicular washer nozzle according to claim 1, **characterized in that**
the oscillation chamber (30) opens to one of upper and lower surfaces of the nozzle tip (54), and
the diffusion restriction portion (56, 58) has an upper correction plate portion (56), which extends integrally from a bottom wall portion of the nozzle tip (54) opposed to an opening surface of the oscillation chamber (30), and a lower correction plate portion (58) integrally extending from a wall portion of the nozzle tip (54) on a side of the opening surface of the oscillation chamber (30).

4. The vehicular washer nozzle according to claim 1, **characterized by** further comprising:
a mount opening (68) that communicates to the receiving portion (66) of the nozzle body (62, 82, 92) and opens in a different direction than one direction, in which the diffusion restriction portion (74, 88, 98) opens,
wherein the diffusion restriction portion (74, 88, 98) is formed in the nozzle body (62, 82, 92), and
the nozzle tip (64, 84, 94) is assembled to the receiving portion (66) through the mount opening (68).

5. The vehicular washer nozzle according to claim 4, **characterized in that**
the diffusion restriction portion (74, 88, 98) has a pair of opening wall surface portions (74, 88, 98) extending contiguous to upper and lower end edges of the diffusive jet port (32), and
the opening wall surface portions (74, 88, 98) are opposed with each other.

6. The vehicular washer nozzle according to any one of claims 1 to 5, **characterized in that** the diffusion restriction portion (38, 40, 56, 58, 74, 88, 98) is inclined at a predetermined angle with respect to a bottom wall surface of the oscillation chamber (30) to set a predetermined direction, in which the diffusive flow is jetted.

7. The vehicular washer nozzle according to any one of claims 1 to 6, **characterized in that** the diffusion restriction portion (98) has a vertically small shape, which is gradually convergent in height toward the opening from the diffusive jet port (32).

8. A vehicular washer device comprising at least one of a washer nozzle arranged on a back surface side of a rear end edge of an engine hood (F) of a vehicle to jet pressure-fed cleansing liquid toward a windshield using the washer nozzle, the washer nozzle including:
a nozzle body (12, 52, 62, 82, 92) that is fixed to the vehicle and formed with a feed passage (26, 44) through which the pressure-fed cleansing liquid is guided and fed; **characterised in that** the wahes nozzle further includes:
a nozzle tip (14, 54, 64, 84, 94) that is integrally assembled fluid-tightly to a receiving portion (24, 66) formed in the nozzle body (12, 52, 62, 82, 92), such that the nozzle tip (14, 54, 64, 84, 94) defines:
an oscillation chamber (30) that communicates to the feed passage (26, 44) to cause self-oscillation of the cleansing liquid fed from the feed passage (26, 44); and
a diffusive jet port (32) that communicates to the oscillation chamber (30) to jet the cleansing liquid as a diffusive flow diffused in a widthwise direction of the vehicle; and
a diffusion restriction portion (38, 40, 56, 58, 74, 88, 98) that extends from the diffusive jet port (32) along a direction in which a diffusive flow is jetted so that the diffusion restriction portion (38, 40, 56, 58, 74, 88, 98) restricts and regulates the diffusive flow jetted from the diffusive jet port (32) in a vertical direction of the vehicle.

9. A vehicular washer device according to claim 8, **characterized by** that the washer nozzle further including:
a mount opening (68) that communicates to the receiving portion (66) of the nozzle body (62, 82, 92) and opens in a different direction than one direction, in which the diffusion restriction portion (74, 88, 98) opens,
wherein the diffusion restriction portion (74, 88, 98) is formed in the nozzle body (62, 82, 92), and
the nozzle tip (64, 84, 94) is assembled to the receiving portion (66) through the mount opening (68).

10. The vehicular washer nozzle according to any one of claims 1 to 7, **characterized in that** the feed passage (26, 44) is communicated to an underside of the oscillation chamber (30) of the nozzle tip (14, 54, 64, 84, 94) in the nozzle body (12, 52, 62, 82, 92).

## Patentansprüche

1. Waschanlagen-Düse für ein Fahrzeug, die auf einer Rückflächenseite einer hinteren Seitenkante einer Motorhaube (F) eines Fahrzeugs angeordnet ist, um eine druckgespeiste Reinigungsflüssigkeit in Richtung einer Windschutzscheibe zu sprühen, wobei die Waschanlagen-Düse enthält:
ein Düsengehäuse (12, 52, 62, 82, 92), das am Fahrzeug befestigt und mit einem Zuführdurchlaß (26, 44) ausgebildet ist, durch den die druckgespeiste Reinigungsflüssigkeit geleitet und zugeführt wird; **dadurch gekennzeichnet, daß** die Waschanlagen-Düse ferner enthält:
eine Düsenspitze (14, 54, 64, 84, 94), die integral fluiddicht an einen Aufnahmeabschnitt (24, 66) montiert ist, der im Düsengehäuse (12, 52, 62, 82, 92) derart ausgebildet ist, daß die Düsenspitze (14, 54, 64, 84, 94) definiert:
eine Oszillationskammer (30), die mit dem Zuführdurchlaß (26, 44) in Verbindung steht, um eine Eigenoszillation der Reinigungsflüssigkeit zu verursachen, die vom Zuführdurchlaß (26, 44) zugeführt wird; und
eine Diffusions-Düsenöffnung (32), die mit der Oszillationskammer (30) in Verbindung steht, um die Reinigungsflüssigkeit als einen Diffusionsstrom zu versprühen, der in einer Querrichtung des Fahrzeugs diffundiert wird; und
einen Diffusions-Begrenzungsabschnitt (38, 40, 56, 58, 74, 88, 98), der sich von der Diffusions-Düsenöffnung (32) entlang einer Richtung erstreckt, in der ein Diffusionsstrom derart versprüht wird, daß der Diffusions-Begrenzungsabschnitt (38, 40, 56, 58, 74, 88, 98) den Diffusionsstrom begrenzt und reguliert, der von der Diffusions-Düsenöffnung (32) in einer vertikalen Richtung des Fahrzeugs versprüht wird.

2. Waschanlagen-Düse für ein Fahrzeug nach Anspruch 1, **dadurch gekennzeichnet, daß**
sich die Oszillationskammer (30) zur oberen oder unteren Fläche der Düsenspitze (14) öffnet, und
der Diffusions-Begrenzungsabschnitt (38, 40) sowohl durch einen oberen Korrekturplatten-Abschnitt (38), der sich einstückig von einem Bodenwand-Abschnitt der Düsenspitze (14) erstreckt, die einer Öffnungsfläche der Oszillationskammer (30) gegenübersteht, als auch durch eine untere Öffnungs-Wandfläche (40) des Düsengehäuses (12) auf einer Seite der Öffnungsfläche der Oszillationskammer (30) definiert ist.

3. Waschanlagen-Düse für ein Fahrzeug nach Anspruch 1, **dadurch gekennzeichnet, daß**
sich die Oszillationskammer (30) zur oberen oder unteren Fläche der Düsenspitze (54) öffnet, und
der Diffusions-Begrenzungsabschnitt (56, 58) einen oberen Korrekturplatten-Abschnitt (56), der sich einstückig von einem Bodenwand-Abschnitt der Düsenspitze (54) erstreckt, die einer Öffnungsfläche der Oszillationskammer (30) gegenübersteht, und einen unteren Korrekturplatten-Abschnitt (58) aufweist, der sich einstückig von einem Wandabschnitt der Düsenspitze (54) auf einer Seite der Öffnungsfläche der Oszillationskammer (30) erstreckt.

4. Waschanlagen-Düse für ein Fahrzeug nach Anspruch 1, **dadurch gekennzeichnet, daß** sie ferner enthält:
eine Montageöffnung (68), die mit dem Aufnahmeabschnitt (66) des Düsengehäuses (62, 82, 92) in Verbindung steht und sich in eine andere Richtung öffnet, als die Richtung, in der sich der Diffusions-Begrenzungsabschnitt (74, 88, 98) öffnet,
wobei der Diffusions-Begrenzungsabschnitt (74, 88, 98) im Düsengehäuse (62, 82, 92) ausgebildet ist, und
die Düsenspitze (64, 84, 94) durch die Montageöffnung (68) an den Aufnahmeabschnitt (66) montiert ist.

5. Waschanlagen-Düse für ein Fahrzeug nach Anspruch 4, **dadurch gekennzeichnet, daß**
der Diffusions-Begrenzungsabschnitt (74, 88, 98) ein Paar von Öffnungs-Wandflächen-Abschnitten (74, 88, 98) aufweist, die sich an die oberen und unteren Endkanten der Diffusions-Düsenöffnung (32) angrenzend erstrecken, und
die Öffnungs-Wandflächen-Abschnitte (74, 88, 98) sich gegenüberstehen.

6. Waschanlagen-Düse für ein Fahrzeug nach einem der Ansprüche 1 bis 5, **dadurch gekennzeichnet, daß** der Diffusions-Begrenzungsabschnitt (38, 40, 56, 58, 74, 88, 98) um einen vorbestimmten Winkel in bezug auf eine Bodenwandfläche der Oszillationskammer (30) geneigt ist, um eine vorbestimmte Richtung einzustellen, in welcher der Diffusionsstrom versprüht wird.

7. Waschanlagen-Düse für ein Fahrzeug nach einem der Ansprüche 1 bis 6, **dadurch gekennzeichnet, daß** der Diffusions-Begrenzungsabschnitt (98) eine in der Vertikalen kleine Form aufweist, die in der Höhe zur Öffnung von der Diffusions-Düsenöffnung (32) allmählich zusammenläuft.

8. Fahrzeug-Waschvorrichtung, die wenigstens eine Waschanlagen-Düse enthält, die auf einer Rückflächenseite einer hinteren Seitenkante einer Motorhaube (F) eines Fahrzeugs angeordnet ist, um eine druckgespeiste Reinigungsflüssigkeit auf eine Windschutzscheibe unter Verwendung der Waschanlagen-Düse zu versprühen, wobei die Waschanlagen-Düse enthält:
ein Düsengehäuse (12, 52, 62, 82, 92), das am Fahrzeug befestigt und mit einem Zuführdurchlaß (26, 44) ausgebildet ist, durch den die druckgespeiste Reinigungsflüssigkeit geleitet und zugeführt wird; **dadurch gekennzeichnet, daß** die Waschanlagen-Düse ferner enthält:
eine Düsenspitze (14, 54, 64, 84, 94), die integral fluiddicht an einen Aufnahmeabschnitt (24, 66) montiert ist, der im Düsengehäuse (12, 52, 62, 82, 92) derart ausgebildet ist, daß die Düsenspitze (14, 54, 64, 84, 94) definiert:
eine Oszillationskammer (30), die mit dem Zuführdurchlaß (26, 44) in Verbindung steht, um eine Eigenoszillation der Reinigungsflüssigkeit zu verursachen, die vom Zuführdurchlaß (26, 44) zugeführt wird; und
eine Diffusions-Düsenöffnung (32), die mit der Oszillationskammer (30) in Verbindung steht, um die Reinigungsflüssigkeit als einen Diffusionsstrom zu versprühen, der in einer Querrichtung des Fahrzeugs diffundiert wird; und
einen Diffusions-Begrenzungsabschnitt (38, 40, 56, 58, 74, 88, 98), der sich von der Diffusions-Düsenöffnung (32) entlang einer Richtung erstreckt, in der ein Diffusionsstrom derart gesprüht wird, daß der Diffusions-Begrenzungsabschnitt (38, 40, 56, 58, 74, 88, 98) den Diffusionsstrom begrenzt und reguliert, der von der Diffusions-Düsenöffnung (32) in einer vertikalen Richtung des Fahrzeugs versprüht wird.

9. Fahrzeug-Waschvorrichtung nach Anspruch 8, **dadurch gekennzeichnet, daß** die Waschanlagen-Düse ferner enthält:
eine Montageöffnung (68), die mit dem Aufnahmeabschnitt (66) des Düsengehäuses (62, 82, 92) in Verbindung steht und sich in eine andere Richtung öffnet, als die Richtung, in der sich der Diffusions-Begrenzungsabschnitt (74, 88, 98) öffnet,
wobei der Diffusions-Begrenzungsabschnitt (74, 88, 98) im Düsengehäuse (62, 82, 92) ausgebildet ist, und
die Düsenspitze (64, 84, 94) durch die Montageöffnung (68) an den Aufnahmeabschnitt (66) montiert ist.

10. Waschanlagen-Düse für ein Fahrzeug nach einem der Ansprüche 1 bis 7, **dadurch gekennzeichnet, daß** der Zuführdurchlaß (26, 44) mit einer Unterseite der Oszillationskammer (30) der Düsenspitze (14, 54, 64, 84, 94) im Düsengehäuse (12, 52, 62, 82, 92) in Verbindung steht.

## Revendications

1. Gicleur de lave-glace pour véhicule placé sur un côté face arrière d'un bord d'extrémité arrière d'un capot-moteur (F) d'un véhicule pour éjecter un liquide de nettoyage alimenté sous pression vers un pare-brise, le gicleur de lave-glace de véhicule comprenant :
un corps de gicleur (12, 52, 62, 82, 92) qui est fixé au véhicule et formé avec un passage d'alimentation (26, 44) à travers lequel le liquide de nettoyage alimenté sous pression est guidé et alimenté ;
**caractérisé en ce que** le gicleur de lave-glace comprend en outre :
une pointe de gicleur (14, 54, 64, 84, 94) qui est intégralement assemblée de manière étanche aux fluides à une partie de réception (24, 66) formée dans le corps de gicleur (12, 52, 62, 82, 92), de telle sorte que la pointe de gicleur (14, 54, 64, 84, 94) définisse :
une chambre d'oscillation (30) qui communique avec le passage d'alimentation (26, 44) pour provoquer l'auto-oscillation du liquide de nettoyage alimenté depuis le passage d'alimentation (26, 44) ; et
un orifice de jet de diffusion (32) qui communique avec la chambre d'oscillation (30) pour éjecter le liquide de nettoyage sous la forme d'un écoulement de diffusion diffusé dans le sens de la largeur du véhicule ; et
une partie de restriction de diffusion (38, 40, 56, 58, 74, 88, 98) qui se prolonge de l'orifice de jet de diffusion (32) suivant une direction dans laquelle un écoulement de diffusion est éjecté de sorte que la partie de restriction de diffusion (38, 40, 56, 58, 74, 88, 98) limite et régule l'écoulement de diffusion éjecté de l'orifice de jet de diffusion (32) dans une direction verticale du véhicule.

2. Gicleur de lave-glace pour véhicule selon la revendication 1, **caractérisé en ce que**
la chambre d'oscillation (30) s'ouvre sur une des faces supérieure et inférieure de la pointe de gicleur (14), et
une partie de restriction de diffusion (38, 40) est définie à la fois par une partie de plaque de correction supérieure (38), qui se prolonge intégralement d'une partie de paroi inférieure de la pointe de gicleur (14) opposée à une face d'ouverture de la chambre d'oscillation (30), et une face de paroi inférieure d'ouverture (40) du corps de gicleur (12) sur un côté de la face d'ouverture de la chambre d'oscillation (30).

3. Gicleur de lave-glace pour véhicule selon la revendication 1, **caractérisé en ce que**
la chambre d'oscillation (30) s'ouvre sur l'une des faces supérieure et inférieure de la pointe de gicleur (54), et
la partie de restriction de diffusion (56, 58) comporte une partie de plaque de correction supérieure (56), qui se prolonge intégralement d'une partie de paroi inférieure de la pointe de gicleur (54) opposée à une face d'ouverture de la chambre d'oscillation (30), et une partie de plaque de correction inférieure (58) se prolongeant intégralement d'une partie de paroi de la pointe de gicleur (54) sur un côté de la face d'ouverture de la chambre d'oscillation (30).

4. Gicleur de lave-glace pour véhicule selon la revendication 1, **caractérisé en ce qu'**il comprend en outre :
une ouverture de montage (68) qui communique avec la partie de réception (66) du corps de gicleur (62, 82, 92) et s'ouvre dans une direction différente de la direction dans laquelle la partie de restriction de diffusion (74, 88, 98) s'ouvre,
dans lequel la partie de restriction de diffusion (74, 88, 98) est formée dans le corps de gicleur (62, 82, 92), et
la pointe de gicleur (64, 84, 94) est assemblée à la partie de réception (66) par l'intermédiaire de l'ouverture de montage (68).

5. Gicleur de lave-glace pour véhicule selon la revendication 4, **caractérisé en ce que**
la partie de restriction de diffusion (74, 88, 98) a une paire de parties de face de paroi d'ouverture (74, 88, 98) se prolongeant en étant contiguës aux bords d'extrémité supérieur et inférieur de l'orifice de jet de diffusion (32), et
les parties de faces de paroi d'ouverture (74, 88, 98) sont opposées l'une à l'autre.

6. Gicleur de lave-glace pour véhicule selon l'une quelconque des revendications 1 à 5, **caractérisé en ce que** la partie de restriction de diffusion (38, 40, 56, 58, 74, 88, 98) est inclinée selon un angle prédéterminé par rapport à une face de paroi inférieure de la chambre d'oscillation (30) pour établir une direction prédéterminée, dans laquelle l'écoulement de diffusion est éjecté.

7. Gicleur de lave-glace pour véhicule selon l'une quelconque des revendications 1 à 6, **caractérisé en ce que** la partie de restriction de diffusion (98) a une petite forme dans le sens vertical, qui converge progressivement en hauteur vers l'ouverture depuis l'orifice de jet de diffusion (32).

8. Dispositif lave-glace comprenant au moins un gicleur de lave-glace placé sur un côté face arrière d'un bord d'extrémité arrière d'un capot-moteur (F) d'un véhicule pour éjecter un liquide de nettoyage alimenté sous pression vers un pare-brise à l'aide du gicleur de lave-glace, le gicleur de lave-glace comprenant :
un corps de gicleur (12, 52, 62, 82, 92) qui est fixé au véhicule et formé avec un passage d'alimentation (26, 44) à travers lequel le liquide de nettoyage alimenté sous pression est guidé et alimenté ;
**caractérisé en ce que** le gicleur de lave-glace comprend en outre :
une pointe de gicleur (14, 54, 64, 84, 94) qui est intégralement assemblé de manière étanche aux fluides à une partie de réception (24, 66) formée dans le corps de gicleur (12, 52, 62, 82, 92), de telle sorte que la pointe de gicleur (14, 54, 64, 84, 94) définisse :
une chambre d'oscillation (30) qui communique avec le passage d'alimentation (26, 44) pour provoquer l'auto-oscillation du liquide de nettoyage alimenté depuis le passage d'alimentation (26, 44) ; et
un orifice de jet de diffusion (32) qui communique avec la chambre d'oscillation (30) pour éjecter le liquide de nettoyage sous la forme d'un écoulement de diffusion diffusé dans le sens de la largeur du véhicule ; et
une partie de restriction de diffusion (38, 40, 56, 58, 74, 88, 98) qui se prolonge de l'orifice de jet de diffusion (32) suivant une direction dans laquelle un écoulement de diffusion est éjecté de sorte que la partie de restriction de diffusion (38, 40, 56, 58, 74, 88, 98) limite et régule l'écoulement de diffusion éjecté de l'orifice de jet de diffusion (32) dans une direction verticale du véhicule.

9. Dispositif lave-glace pour véhicule selon la revendication 8, **caractérisé en ce que** le gicleur de lave-glace comprend en outre :
une ouverture de montage (68) qui communique avec la partie de réception (66) du corps de gicleur (62, 82, 92) et s'ouvre dans une direction différente de la direction dans laquelle la partie de restriction de diffusion (74, 88, 98) s'ouvre,
dans lequel la partie de restriction de diffusion (74, 88, 98) est formée dans le corps de gicleur (62, 82, 92), et
la pointe de gicleur (64, 84, 94) est assemblée à la partie de réception (66) par l'intermédiaire de l'ouverture de montage (68).

10. Gicleur de lave-glace pour véhicule selon l'une quelconque des revendications 1 à 7, **caractérisé en ce que** le passage d'alimentation (26, 44) est mis en communication avec une face inférieure de la chambre d'oscillation (30) de la pointe de gicleur (14, 54, 64, 84, 94) dans le corps de gicleur (12, 52, 62, 82, 92).
